# EUROPEAN PATENT APPLICATION

(11) **EP 3 351 332 A1**
(43) Date of publication of application: **25.07.2018**
(21) Application number: 18152108.9
(22) Date of filing: 17.01.2018
(51) Int. Cl.: B23K 1/00, B23K 1/20

(54) **METHOD OF WIDE GAP BRAZING AND BRAZED ARTICLE**

(30) Priority: 19.01.2017 US 201715410460
(71) Applicant: General Electric Company, Schenectady, NY 12345 (US)
(72) Inventor: HENDERSON, Brian Leslie, Greenville, SC South Carolina 29615 (US); COOK, Paul A., Greenville, SC South Carolina 29615 (US); DORRIETY, Daniel James, Greenville, SC South Carolina 29615 (US); WHIMS, Lawrence James, Greenville, SC South Carolina 29615 (US)
(74) Representative: Foster, Christopher Michael

(57) **Abstract**

A method of brazing includes placing a non-foam matrix (24) in a gap (10) and applying a molten braze material (16) to the gap (10) such that the molten braze material (16) flows into the gap (10) and through the non-foam matrix (24) by capillary action to fill the gap (10) and cools to form a solid braze (18) in the gap (10). A brazed article (30) includes at least one component defining a gap (10), a non-foam matrix (24) in the gap (10) and a solid braze (18) interspersed through the non-foam matrix (24). The non-foam matrix (24) and the solid braze (18) fill the gap (10).

## Description

### FIELD OF THE INVENTION

The present embodiments are directed to braze matrices, brazing methods, and brazed articles. More specifically, the present embodiments are directed to materials and methods that promote capillary flow of braze material in a gap and brazed articles produced by such materials and methods.

### BACKGROUND OF THE INVENTION

Brazing is a process of filling a void space in a metal item, such as a crack or other feature in the metal item, or between two or more metal items, typically to join the two items together. A filler braze metal material is heated, melts, and flows into a joint between the two metal items or into a crack or gap within a metal item. The filler braze metal material has a lower melting point than the metal items such that the metal items do not melt during the brazing process, although in some situations alloying elements are added to the braze material that purposely lower the melting point of the surface of the base material to enable a thin film of the base material to melt during the brazing process. The filler braze metal material ideally flows into the joint, crack, or gap by capillary action. The filler metal is heated to slightly above its melting (liquidus) temperature in a suitable atmosphere, usually a flux, to melt and flow, and then cools to fill the crack or gap or join the two metal items together. Brazing is capable of joining the same or different metals with considerable strength.

Brazing works well when the dimensions of the void space are small. When the void space becomes large enough that the filler braze material no longer flows by capillary action in at least a portion of the void space, a less than optimal braze may be produced. Such a brazed joint may include one or more unwanted voids or a eutectic phase in one or more portions of the solidified braze material that reduces the strength of the braze.

Wide gap brazing techniques have been developed to address conditions where brazing is desired but the dimensions of the void space are too large for flow by capillary action only. Such wide gap brazing techniques include use of special wide gap braze alloy compositions and insertion of a filler powder or mesh powder or a shim into the gap prior to brazing to reduce the dimensions of the void space.

### BRIEF DESCRIPTION OF THE INVENTION

In an embodiment, a method of brazing includes placing a non-foam matrix in a gap and applying a molten braze material to the gap such that the molten braze material flows into the gap and through the non-foam matrix by capillary action to fill the gap and cools to form a solid braze in the gap.

In another embodiment, a brazed article includes at least one component defining a gap, a non-foam matrix in the gap, and a solid braze interspersed through the non-foam matrix. The non-foam matrix and the solid braze fill the gap.

Other features and advantages of the present invention will be apparent from the following more detailed description, taken in conjunction with the accompanying drawings which illustrate, by way of example, the principles of the invention.

### BRIEF DESCRIPTION OF THE DRAWINGS

FIG. 1 is a schematic cross sectional view of a brazing process.
FIG. 2 is a schematic cross sectional view of a brazed article from the brazing process of FIG. 1.
FIG. 3 is a schematic partial cross sectional view of a braze matrix being inserted into a gap in an embodiment of the present disclosure.
FIG. 4 is a schematic partial cross sectional view of a molten braze material being applied to a gap containing a braze matrix in an embodiment of the present disclosure.
FIG. 5 is a schematic cross sectional view of a brazed article in an embodiment of the present disclosure.

Wherever possible, the same reference numbers will be used throughout the drawings to represent the same parts.

### DETAILED DESCRIPTION OF THE INVENTION

Provided is materials and methods that promote capillary flow of braze material in a gap and brazed articles produced by such materials and methods.

Embodiments of the present disclosure, for example, in comparison to concepts failing to include one or more of the features disclosed herein, provide wide gap brazing that is free of voids, provide wide gap brazing that is free of eutectic phases, provide a complete capillary field to a gap lacking a complete capillary field, provide a higher quality braze in a gap, reduce or eliminate the rework that is intrinsic to most complex brazed joints formed during repair of non-weldable materials, or combinations thereof.

A "gap", as used herein, refers to any void volume, such as, for example, a crack or aperture within an article or a joint between two or more articles, having a gap distance between opposing surfaces large enough such that, in the absence of any other material being present in the gap, the gap does not fill with molten braze material by capillary action alone upon application of the molten braze material to the gap, the gap does not fill with molten braze material without voids in the gap or the solidified braze material upon application of the molten braze material to the gap, or the gap does not fill with molten braze material without a eutectic phase in the solidified braze material upon application of the molten braze material to the gap.

A "braze matrix", as used herein, refers to any matrix material that provides a capillary field such that molten braze material flows throughout the matrix material by capillary action.

In some embodiments, the braze matrix is used in a gas turbine power generation component. In some embodiments, the braze matrix is used in brazing a stainless steel alloy, a nickel-based superalloy, and/or a cobalt-based superalloy.

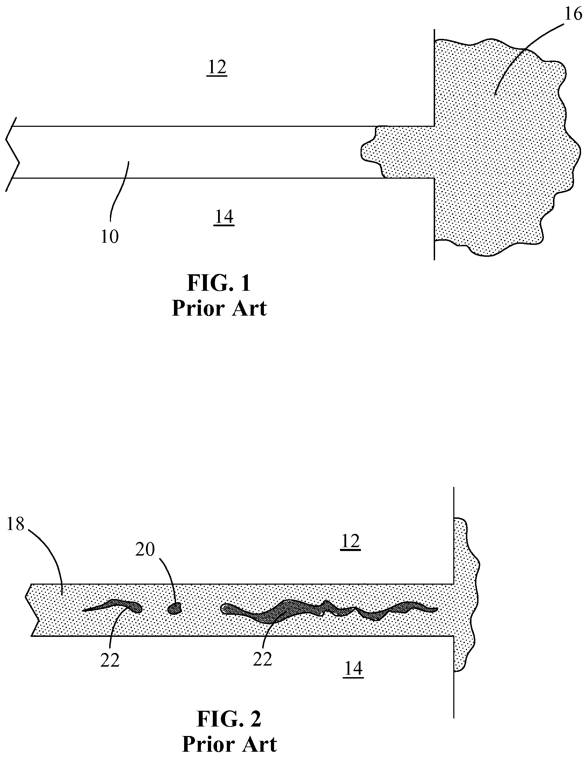

Referring to FIG. 1 and FIG. 2, when molten braze material 16 is applied to a gap 10 between a first portion 12 and a second portion 14 having a gap distance from the surface of the first portion 12 to the surface of the second portion 14 that is too large to permit capillary flow of the molten braze material 16 throughout the gap 10, the resulting solid braze 18 may contain voids 20 and a eutectic phase 22 at one or more locations of the gap 10. The voids 20 and the eutectic phase 22 both weaken the braze formed between the first portion 12 and the second portion 14. The gap 10 shown in FIG. 1 and FIG. 2 may be formed between a first component and a second component or alternatively within a single component.

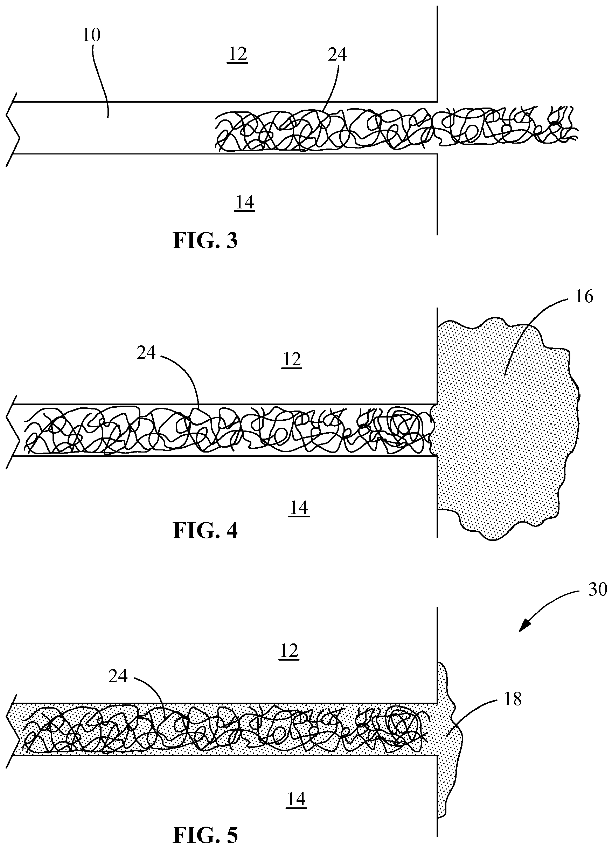

In a method of the present disclosure, a braze matrix 24 is inserted into a gap 10 between a first portion 12 and a second portion 14. FIG. 3 shows the braze matrix 24 being inserted into the gap 10. Alternatively, the first portion 12 and the second portion 14 may be portions of a single component. The gap 10 is too large to permit capillary flow of the molten braze material 16 throughout the gap 10, but the braze matrix 24 in the gap 10 provides a capillary field such that when molten braze material 16 is applied to the gap 10, as shown in FIG. 4, the molten braze material 16 fills the gap 10 by capillary action.

As shown in FIG. 5, the braze matrix 24 and the solid braze 18 together fill the gap 10 between the first portion 12 and the second portion 14 such that there are no voids 20 to form a brazed article 30. In some embodiments, the first portion 12 is a first component, and the second portion 14 is a second component. Alternatively, the first portion 12 and the second portion 14 may be portions of a single component. The solid braze 18 is free of a eutectic phase 22. The braze is achieved without pre-placed or pre-packed braze powders in the braze gap. The braze matrix 24 provides much improved surface tension effects for capillary movement of the molten braze material 16 within the gap 10. The braze of FIG. 5 is of a higher quality than the braze shown in FIG. 2. The higher quality of the braze includes, but is not limited to, reduced or no eutectic formation and a porosity that is less than 3%, alternatively less than 2%, alternatively less than 1%, or any range or sub-range therebetween. Conventional wide gap brazing includes significant eutectic phase volumes and macro-voiding with a porosity greater than 3%.

In some embodiments, the first portion 12 and the second portion 14 are formed of the same or different superalloy compositions. In some embodiments, the superalloy composition is a cobalt-based superalloy, a nickel-based superalloy, or an iron-based superalloy. In some embodiments, the first portion 12 and/or the second portion 14 are formed of a material used in the gas turbine industry that is considered to be a non-weldable alloy.

In some embodiments, the superalloy composition of the first portion 12 and/or the second portion 14 is R108, Mar-M-247, H282, Nimonic 263, Inconel 625, or Inconel 600.

As used herein, "R108" refers to an alloy including a composition, by weight, of between about 9% and about 10% cobalt (Co), between about 9.3% and about 9.7% tungsten (W), between about 8.0% and about 8.7% chromium (Cr), between about 5.25% and about 5.75% aluminum (Al), between about 2.8% and about 3.3% tantalum (Ta), between about 1.3% and about 1.7% hafnium (Hf), up to about 0.9% titanium (Ti) (for example, between about 0.6% and about 0.9% Ti), up to about 0.6% molybdenum (Mo) (for example, between about 0.4% and about 0.6% Mo), up to about 0.2% iron (Fe), up to about 0.12% silicon (Si), up to about 0.1% manganese (Mn), up to about 0.1% copper (Cu), up to about 0.1% carbon (C) (for example, between about 0.07% and about 0.1% C), up to about 0.1% niobium (Nb), up to about 0.02% zirconium (Zr) (for example, between about 0.005% and about 0.02% Zr), up to about 0.02% boron (B) (for example, between about 0.01% and about 0.02% B), up to about 0.01% phosphorus (P), up to about 0.004% sulfur (S), incidental impurities, and a balance of nickel (Ni).

As used herein, "Mar-M-247" refers to an alloy including a composition, by weight, of between about 9.3% and about 9.7% W, between about 9.0% and about 9.5% Co, between about 8.0% and about 8.5% Cr, between about 5.4% and about 5.7% Al, up to about 0.25% Si, up to about 0.1% Mn, between about 0.06% and about 0.09% C, incidental impurities, and a balance of Ni.

As used herein, "H282" refers to an alloy including a composition, by weight, of between about 18.5% and about 20.5% Cr, between about 9% and about 11% Co, between about 8% and about 9% Mo, between about 1.9% and about 2.3% Ti, between about 1.38% and about 1.65% Al, up to about 1.5% Fe, up to about 0.3% Mn, up to about 0.15% Si, up to about 0.1% Cu, between about 0.04% and about 0.08% C, up to about 0.02% zirconium (Zr), up to about 0.015% P, up to about 0.015% S, between about 0.003% and about 0.01% B, incidental impurities, and a balance of Ni.

As used herein, "Nimonic 263" refers to an alloy including a composition, by weight, of between about 19% and about 21% Co, between about 19% and about 21% Cr, between about 5.6% and about 6.1% Mo, between about 2.4% and about 3.8% combined Al and Ti, including between about 1.9% and about 2.4% Ti and up to about 0.6% Al, up to about 0.7% Fe, up to about 0.6% Mn, up to about 0.4% Si, up to about 0.2% Cu, between about 0.04% and about 0.08% C, incidental impurities, and a balance of Ni.

As used herein, "Inconel 625" refers to an alloy including a composition, by weight, of between about 20% and about 23% Cr, between about 8% and about 10% Mo, up to about 5% Fe, between about 3.2% and about 4.2% Nb plus Ta, up to about 1% Co, up to about 0.5% Mn, up to about 0.5% Si, up to about 0.4% Al, up to about 0.4% Ti, up to about 0.1% C, incidental impurities, and a balance (at least 58%) of Ni.

As used herein, "Inconel 600" refers to an alloy including a composition, by weight, of between about 14% and about 17% chromium (Cr), between about 6% and about 10% iron (Fe), up to about 1% manganese (Mn), up to about 0.5% silicon (Si), up to about 0.5% copper (Cu), up to about 0.15% carbon (C), up to about 0.015 sulfur (S), incidental impurities, and a balance of nickel (Ni) and cobalt (Co), the balance being at least 72% of the alloy.

In some embodiments, the first portion 12 may be tack welded to the second portion 14 to set the dimensions of the gap 10 prior to applying the molten braze material 16 to the gap 10.

Any braze composition, including, but not limited to, any conventional braze composition, may be used in the brazing method. In some embodiments, different percentages of high melt braze alloy and low melt braze alloy are combined to adjust the properties of the braze composition, depending on the mesh size of the braze matrix 24. The melting temperature of the braze composition is less than the melting temperature of the first portion 12 and the second portion 14. The melting temperature of the braze composition is also less than the melting temperature of the braze matrix 24.

Since the maximum dimension for which the molten braze material 16 is capable of flowing by capillary action depends on the physical properties of the molten braze material 16, the minimum gap distance for which the brazed article 30 benefits from the brazing method depends on at least the brazing conditions and the composition of the braze material. This minimum gap distance is in the range of about 50 µm to about 380 µm (about 2 mil to about 15 mil) for many conventional brazing conditions and braze materials. In some embodiments, the wide braze gap 10 for brazing using a braze matrix 24 has a minimum gap distance in the range of about 200 µm to about 1.27 cm (about 8 mil to about 500 mil), alternatively about 250 µm to about 1.27 cm (about 10 mil to about 500 mil), alternatively about 380 µm to about 1.27 cm (about 15 mil to about 500 mil), or any range or sub-range therebetween.

In some embodiments, the gap 10 is cylindrical in shape, with the gap distance being the diameter of the gap 10. In some embodiments, the gap 10 is planar in shape, with the gap distance being the width across the gap 10.

The brazing method may be utilized, for example, at any gap 10 where the reconditioning of non-weldable turbine nozzles and turbine buckets includes brazing. The gap 10 may be formed by placing a first portion 12 next to a second portion 14, may be formed during service of components, or may be machined at the location of a feature formed during service. The gap 10 may be closed at one end or portion or may alternatively be open at multiple ends or portions. When the gap 10 is formed by machining, the gap 10 may have any geometry formable by machining, such as, for example, a slot or a cylindrical geometry.

In some embodiments, the braze matrix 24 provides a capillary field through which molten braze material 16 wants to continually flow. The capillary field provides a constant attraction between the molten braze material 16 and the next empty pocket to be filled. In some embodiments, the braze matrix 24 provides super-conduction of the molten braze material 16 across the width of the gap 10.

The braze matrix 24 may be formed of any material or material capable of being formed into a matrix. The material of the braze matrix 24 preferably has a melting temperature greater than the melting temperature of the braze material. In some embodiments, the braze matrix 24 is an interwoven matrix material. In some embodiments, the interwoven matrix material is an interwoven metallic matrix. In some embodiments, the interwoven metallic matrix is a superalloy composition. In some embodiments, the superalloy composition is a cobalt-based superalloy, a nickel-based superalloy, or an iron-based superalloy. The superalloy composition of the braze matrix 24 may be the same as or different than the superalloy compositions of the first portion 12 and the second portion 14.

In some embodiments, the superalloy composition of the braze matrix 24 is R108, Mar-M-247, H282, Nimonic 263, Inconel 625, or Inconel 600.

The braze matrix 24 may be produced by any method of providing a three-dimensional matrix structure having a predetermined equivalent mesh size. The braze matrix 24 is preferably a non-foam matrix that is not formed as a foam. In some embodiments, the non-foam matrix is a non-metallic matrix. In some embodiments, the non-foam matrix is a ceramic matrix. In other embodiments, the non-foam matrix is a metallic matrix. In some embodiments, the non-foam matrix is a fiber matrix formed of fibers. The fibers are preferably interwoven to provide a predetermined maximum void space size. The fibers of the fiber matrix are preferably substantially uniform in cross sectional area and similar in length. In some embodiments, the fibers are substantially circular in cross section. In some embodiments, the fibers are substantially rectangular in cross section. The fibers may be interwoven in any manner to form the braze matrix 24 having the predetermined equivalent mesh size. In some embodiments, the fibers of the fiber matrix are metallic fibers.

The maximum pore size defining the predetermined equivalent mesh size may be in the range of about 10 µm to about 250 µm (about 0.4 mil to about 10 mil), alternatively about 10 µm to about 50 µm (about 0.4 mil to about 2 mil), alternatively about 50 µm to about 100 µm (about 2 mil to about 4 mil), alternatively about 100 µm to about 250 µm (about 4 mil to about 10 mil), alternatively about 10 µm (about 0.4 mil), alternatively about 100 µm (about 4 mil), alternatively about 250 µm (about 10 mil), or any value, range, or sub-range therebetween.

In some embodiments, the braze matrix 24 is formed in a similar manner to certain filters formed from metal fibers, including, but not limited to, certain textile sintered filters commercially available from Mott Corporation (Plainville, CT).

The interwoven matrix material may have the equivalent of a 100-µm (3.9 mil) mesh size, alternatively a mesh size in the range of about 15 µm to about 100 µm (about 0.59 mil to about 3.9 mil), alternatively a mesh size in the range of about 80 µm to about 100 µm (about 3.1 mil to about 3.9 mil), alternatively a mesh size in the range of about 60 µm to about 80 µm (about 2.4 mil to about 3.1 mil), alternatively a mesh size in the range of about 40 µm to about 60 µm (about 1.6 mil to about 2.4 mil), alternatively a mesh size in the range of about 20 µm to about 40 µm (about 0.79 mil to about 1.6 mil), alternatively a mesh size in the range of about 15 µm to about 20 µm (about 0.59 mil to about 0.79 mil), or any value, range, or sub-range therebetween.

The braze matrix 24 may be cut into a great variety of complex geometries and contours applicable to many gap 10 geometries of many components and component families. In some embodiments, the braze matrix 24 is formed to have a geometry complementary to the geometry of the gap 10. In some embodiments, the gap 10 is machined to a pre-determined geometry and the braze matrix 24 is formed to have a pre-determined geometry complementary to the pre-determined geometry of the gap 10.

The gap 10 may have a maximum width or diameter of at least 0.38 mm (15 mil), alternatively at least 0.64 mm (25 mil), alternatively in the range of about 0.64 mm to about 4.1 mm (about 25 mil to about 160 mil), alternatively in the range of about 0.64 mm to about 1.3 mm (about 25 mil to about 50 mil), alternatively in the range of about 1.3 mm to about 3.0 mm (about 50 mil to about 120 mil), alternatively in the range of about 2.0 mm to about 2.5 mm (about 80 mil to about 100 mil), or any value, range, or sub-range therebetween.

In some embodiments, a brazing method is applied to a component in the hot gas path of a gas turbine. For example, a brazing method may address one or more features in a first turbine nozzle set and provide better joint strength than conventional brazing methods. In some embodiments, a brazing method is applied to a gas turbine hot gas path wall.

In some embodiments, the component to be brazed has a composition including a cobalt-based superalloy, a nickel-based superalloy, or an iron-based superalloy. For example, the alloy may have a composition, by weight, of between about 9% and about 10% cobalt (Co), between about 9.3% and about 9.7% tungsten (W), between about 8.0% and about 8.7% chromium (Cr), between about 5.25% and about 5.75% aluminum (Al), between about 2.8% and about 3.3% tantalum (Ta), between about 1.3% and about 1.7% hafnium (Hf), up to about 0.9% titanium (Ti), (for example, between about 0.6% and about 0.9% Ti), up to about 0.6% molybdenum (Mo), (for example, between about 0.4% and about 0.6% Mo), up to about 0.2% iron (Fe), up to about 0.12% silicon (Si), up to about 0.1% manganese (Mn), up to about 0.1% copper (Cu), up to about 0.1% carbon (C), (for example, between about 0.07% and about 0.1% C), up to about 0.1% niobium (Nb), up to about 0.02% zirconium (Zr), (for example, between about 0.005% and about 0.02% Zr), up to about 0.02% boron (B), (for example, between about 0.01% and about 0.02%), up to about 0.01% phosphorus (P), up to about 0.004% sulfur (S), incidental impurities, and a balance of nickel (Ni).

A variety of heating methods may be used to heat the braze material to a brazing temperature. In some embodiments, the braze assembly of the braze matrix 24 in the gap 10 and the braze material is placed in a vacuum furnace. In some embodiments, a brazing method permits wide gap brazing with induction heating to melt the braze material. In some embodiments, the braze matrix 24 prevents the molten braze material 16 from running out the bottom of the gap 10.

In some embodiments, a suitable braze temperature is at least about 815 °C (about 1500 °F), alternatively at least about 1090 °C (about 2000 °F), alternatively at least about 1150 °C (about 2100 °F), alternatively at least about 1175 °C (about 2150 °F), alternatively at least about 1190 °C (about 2175 °F), alternatively in the range of about 815 °C to about 1230 °C (about 1500 °F to about 2250 °F), alternatively in the range of about 815 °C to about 1090 °C (about 1500 °F to about 2000 °F), alternatively in the range of about 1090 °C to about 1370 °C (about 2000 °F to about 2500 °F), alternatively in the range of about 1150 °C to about 1290 °C (about 2100 °F to about 2350 °F), alternatively in the range of about 1175 °C to about 1230 °C (about 2150 °F to about 2250 °F), alternatively in the range of about 1190 °C to about 1230 °C (about 2175 °F to about 2250 °F), or any combination, sub-combination, range, or sub-range thereof.

In some embodiments, a suitable braze time is about 15 minutes, alternatively up to about 15 minutes, alternatively about 10 minutes to about 20 minutes, alternatively about 5 minutes to about 25 minutes, or any combination, sub-combination, range, or sub-range thereof.

While the invention has been described with reference to one or more embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims. In addition, all numerical values identified in the detailed description shall be interpreted as though the precise and approximate values are both expressly identified.

Various aspects and embodiments of the present invention are defined by the following clauses:
1. A method of brazing comprising:
   placing a non-foam matrix in a gap; and
   applying a molten braze material to the gap such that the molten braze material flows into the gap and through the non-foam matrix by capillary action to fill the gap and cools to form a solid braze in the gap.
2. The method of clause 1 further comprising machining the gap to a predetermined geometry prior to placing the non-foam matrix in the gap.
3. The method of clause 1 further comprising heating a braze composition to a braze temperature to form the molten braze material.
4. The method of clause 1, wherein the gap is an open joint formed between a first component and a second component.
5. The method of clause 1, wherein the non-foam matrix provides a capillary field for the molten braze material flowing into the gap.
6. The method of clause 1, wherein the non-foam matrix is a fiber matrix of interwoven metallic fibers.
7. The method of clause 1, wherein the non-foam matrix has a mesh size in the range of about 15 µm to about 100 µm (about 0.6 mil to about 3.9 mil).
8. The method of clause 1, wherein the gap has a width in the range of about 0.64 mm to about 4.1 mm (about 25 mil to about 160 mil).
9. The method of clause 1, wherein the gap has a gap size such that the molten braze material does not flow by capillary action throughout the gap without the non-foam matrix being present in the gap.
10. The method of brazing of clause 1, wherein the non-foam matrix comprises a material selected from the group consisting of a cobalt-based superalloy, a nickel-based superalloy, and an iron-based superalloy.
11. The method of clause 1, wherein the gap is located at a hot gas path surface of a turbine component.
12. The method of clause 1, wherein the non-foam matrix promotes super-capillary conduction of the molten braze material across a width of the gap.
13. A brazed article comprising:
   at least one component defining a gap;
   a non-foam matrix in the gap; and
   a solid braze interspersed through the non-foam matrix, wherein the non-foam matrix and the solid braze fill the gap.
14. The brazed article of clause 13, wherein the at least one component comprises a first component and a second component, and the gap is an open joint between the first component and the second component.
15. The brazed article of clause 13, wherein the non-foam matrix provides a capillary field for the molten braze material flowing into the gap.
16. The brazed article of clause 13, wherein the non-foam matrix has a mesh size in the range of about 15 µm to about 100 µm (about 0.6 mil to about 3.9 mil).
17. The brazed article of clause 13, wherein the gap has a width in the range of about 0.64 mm to about 4.1 mm (about 25 mil to about 160 mil).
18. The brazed article of clause 13, wherein the non-foam matrix comprises a material selected from the group consisting of a cobalt-based superalloy, a nickel-based superalloy, and an iron-based superalloy.
19. The brazed article of clause 13, wherein the solid braze formed in the gap with the non-foam matrix is substantially free of voids and is substantially free of a eutectic phase.
20. The brazed article of clause 13, wherein the gap is located at a hot gas path surface of a turbine component.

## Claims

1. A method of brazing comprising:
placing a non-foam matrix (24) in a gap (10); and
applying a molten braze material (16) to the gap (10) such that the molten braze material (16) flows into the gap (10) and through the non-foam matrix (24) by capillary action to fill the gap (10) and cools to form a solid braze (18) in the gap (10).

2. The method of claim 1 further comprising machining the gap (10) to a predetermined geometry prior to placing the non-foam matrix (24) in the gap (10).

3. The method of claim 1 or claim 2 further comprising heating a braze composition to a braze temperature to form the molten braze material (16).

4. The method of any preceding claim, wherein the non-foam matrix (24) provides a capillary field for the molten braze material (16) flowing into the gap (10).

5. The method of any preceding claim, wherein the non-foam matrix (24) is a fiber matrix of interwoven metallic fibers.

6. The method of any preceding claim, wherein the non-foam matrix (24) has a mesh size in the range of about 15 µm to about 100 µm (about 0.6 mil to about 3.9 mil).

7. The method of any preceding claim, wherein the gap (10) has a gap size such that the molten braze material (16) does not flow by capillary action throughout the gap (10) without the non-foam matrix (24) being present in the gap (10).

8. The method of any preceding claim, wherein the non-foam matrix (24) promotes super-capillary conduction of the molten braze material (16) across a width of the gap (10).

9. A brazed article (30) comprising:
at least one component defining a gap (10);
a non-foam matrix (24) in the gap (10); and
a solid braze (18) interspersed through the non-foam matrix (24), wherein the non-foam matrix (24) and the solid braze (18) fill the gap (10).

10. The brazed article (30) of claim 9, wherein the solid braze (18) formed in the gap (10) with the non-foam matrix (24) is substantially free of voids (20) and is substantially free of a eutectic phase (22).

11. The brazed article (30) of claim 9 or claim 10, wherein the at least one component comprises a first component (12) and a second component (14), and the gap (10) is an open joint between the first component (12) and the second component (14).

12. The brazed article (30) of any of claims 9 to 11, wherein the non-foam matrix (24) provides a capillary field for the molten braze material (16) flowing into the gap (10) and the non-foam matrix (24) has a mesh size in the range of about 15 µm to about 100 µm (about 0.6 mil to about 3.9 mil).

13. The brazed article (30) of any of claims 9 to 12, wherein the gap (10) has a width in the range of about 0.64 mm to about 4.1 mm (about 25 mil to about 160 mil) and the gap (10) is located at a hot gas path surface of a turbine component.

14. The brazed article (30) of any of claims 9 to 13, wherein the non-foam matrix (24) comprises a material selected from the group consisting of a cobalt-based superalloy, a nickel-based superalloy, and an iron-based superalloy.

15. The brazed article (30) of any of claims 9 to 14, wherein the solid braze (18) formed in the gap (10) with the non-foam matrix (24) is substantially free of voids (20) and is substantially free of a eutectic phase (22).
